# EUROPÄISCHE PATENTANMELDUNG

(11) **EP 0 536 702 A1**
(43) Veröffentlichungstag der Anmeldung: **14.04.1993**
(21) Anmeldenummer: 92117052.8
(22) Anmeldetag: 06.10.1992
(51) Int. Cl.: B65G 47/68

(54) **Anordnung zum Umformen eines angeförderten mehrspurigen Behälterstromes in einen abzufördernden einspurigen Behälterstrom**

(30) Priorität: 10.10.1991 DE 4133588
(71) Anmelder: KHS Maschinen- und Anlagenbau Aktiengesellschaft, D-47057 Duisburg (DE)
(72) Erfinder: Lönnig, Manfred, W-6550 Bad Kreuznach (DE)

(57) **Zusammenfassung**

Bei einer Anordnung zum Umformen eines angeförderten, mehrspurigen Behälterstromes in einen abzufördernden einspurigen Behälterstrom ist zwischen dem Zuförderer (2) für den einspurigen Behälterstrom ein Zwischenförderer (3) vorgesehen, der aus einer Vielzahl mit abgestuften Geschwindigkeiten (Geschwindigkeitsabstufungen) angetriebenen Förderbändern (7) besteht. Zum Umformen des mehrspurigen Behälterstromes bildet der Zwischenförderer (3) eine Gasse, die sich in Transportrichtung (A) symmetrisch zu einer Mittelachse (M) des Zwischenförderers (3) trichterartig bis auf eine den abzufördernden einspurigen Behälterstrom entsprechende Förderbreite verengt. An einem Ausgangsbereich des Zwischenförderers (3) schließt sich der zumindest an diesem Ausgangsbereich symmetrisch zur Mittelachse (M) ausgebildete Abförderer (4) mit einer dem einspurigen Behälterstrom entsprechenden Förderbreite an. In Transportrichtung (A) weist der Zwischenförderer (3) mehr als zwei Geschwindigkeitsabstufungen auf. Weiterhin sind Geschwindigkeitsabstufungen auch quer zur Transportrichtung (A) vorgesehen.

## Beschreibung

Die Erfindung bezieht sich auf eine Anordnung gemäß Oberbegriff Patentanspruch 1.

Eine Anordnung dieser Art ist bekannt (EP-A-0 252 461). Bei der bekannten Anordnung wird auf dem Zwischenförderer sowie auf dem Abförderer ein angeförderter mehrspuriger Flaschenstrom in zwei Stufen in den abzufördernden einspurigen Flaschenstrom umgewandelt, und zwar derart, daß aus Ausgangsbereich des Zwischenförderers noch ein zweispuriger Flaschenstrom vorliegt, der dann auf dem Abförderer endgültig in den einspurigen Flaschenstrom umgeformt wird. Der Zwischenförderer, welcher auch zur Auflockerung des angeförderten Flaschenstromes über einen von wenigstens einem Überschubblech gebildeten Übergang an den Zuförderer anschließt, bildet in seinem Umformbereich eine von Führungen, d.h. von dortigen Führungsgeländern seitlich begrenzte Gasse, deren Spur- bzw. Förderbreite in Transportrichtung trichterartig und symmetrisch zu einer in Transportrichtung verlaufenden horizontalen Mittelachse abnimmt. Der Zwischenförderer ist in seinem Umformbereich als Beschleunigungsstrecke für die Flaschen ausgebildet, d.h. er besteht dort aus mehreren Transportbändern, die teilweise auch schmale Transportbänder sind und Gruppen bzw. Förderabschnitte mit in Transportrichtung aneinander anschließenden Transportbändern bilden. Die Transportbänder sind dabei abgestuft mit unterschiedlicher Geschwindigkeit derart angetrieben, daß sich eine in Transportrichtung zunehmende Fördergeschwindigkeit ergibt. Dort, wo das Umformen des zweispurigen Flaschenstromes in den einspurigen Flaschenstrom erfolgt, ist bei der bekannten Anordnung wiederum ein von wenigstens einem Überschubblech gebildeter Übergang vorgesehen.

Aufgabe der Erfindung ist es, als Alternative zu diesem Stand der Technik eine Anordnung aufzuzeigen, die in nur einer Stufe ein druckloses Umformen eines angeförderten mehrspurigen Behälterstromes in einen abzufördernden einspurigen Behälterstrom bei hoher Leistung gestattet.

Zur Lösung dieser Aufgabe ist eine Anordnung entsprechend dem kennzeichnenden Teil des Patentanspruches 1 ausgebildet.

Bei der erfindungsgemäßen Anordnung erfolgt das Auflockern und auch das Umformen des mehrspurigen Behälterstromes ausschließlich am Zwischenförderer, und zwar das Auflockern des angeförderten Behälterstromes insbesondere im ersten Teilbereich des Zwischenförderers, der (Teilbereich) hierfür in Transportrichtung eine genügend große Länge aufweist und in dem (Teilbereich) die zwischen den Führungsgeländern gebildete Gasse eine konstante, dem mehrspurigen Behälterstrom entsprechende Breite besitzt. In dem sich anschließenden zweiten Teilbereich des Zwischenförderers, an dem sich die Gasse trichter- oder keilartig verengt, erfolgt dann das Zusammenführen des aufgelockerten Behälterstromes in den einspurigen Behälterstrom. In beiden Teilbereichen des Zwischenförderers ist die Gasse symmetrisch zu der Mittelachse ausgeführt. Der Zwischenförderer im Bereich dieser Gasse, der Anschluß bzw. Übergang des Zwischenförderers zum Abförderer sowie die unmittelbar an den Zwischenförderer anschließend vorgesehene Gasse des Abförderers mit der dem einspurigen Behälterstrom entsprechenden Spur- bzw. Förderbreite sind hinsichtlich ihrer Formgebung, Anordnung sowie Gruppierung der zweiten Förderbänder bzw. der von diesen gebildeten Förderabschnitte symmetrisch zur Mittelachse M ausgeführt. Dies gilt zumindest auch in bezug auf den Geschwindigkeitsgradienten bzw. die Geschwindigkeitsabstufungen in Transportrichtung. Durch den Geschwindigkeitsgradienten bzw. durch die Geschwindigkeitsabstufungen senkrecht zur Transportrichtung, die (Abstufungen) bevorzugt ebenfalls symmetrisch zur Mittelachse ausgeführt sind, ergibt sich eine optimale Beschleunigung und Auflockerung des Behälterstromes und damit verbunden eine optimale drucklose Zusammenführung der Behälter in den einspurigen Behälterstrom.

Um das Auflockern des Behälterstromes in dem ersten Teilbereich des Zwischenförderers optimal zu gestalten, ist dieser Teilbereich an seiner unmittelbar an den Zuförderer anschließenden Teillänge als Dosierband bzw. Dosierbereich mit wenigstens einem Stausensor ausgeführt, der den dann als Puffer bzw. Pufferband betriebenen Zuförderer steuert.

Weiterbildungen der Erfindung sind Gegenstand der Unteransprüche.

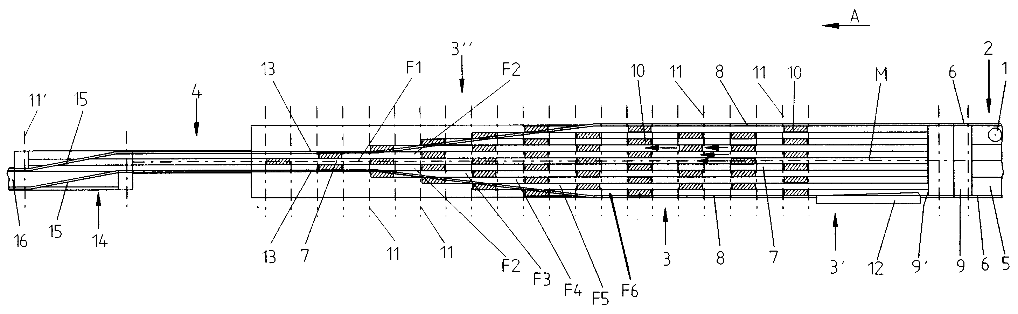

Die Erfindung wird im folgenden anhand der Figur, die in vereinfachter schematischer Darstellung und in Draufsicht eine Ausführungsform der erfindungsgemäßen Anordnung zum Umformen eines angeförderten mehrspurigen Flaschenstromes in einen abzufördernden einspurigen Flaschenstrom zeigt, näher erläutert.

Die in der Figur dargestellte Vorrichtung zum Umformen des angeförderten, eine Vielzahl von Flaschen 1 aufweisenden mehrspurigen Flaschenstromes in den abzufördernden einspurigen Flaschenstrom besteht im wesentlichen aus einem Zuförderer 2, aus einem Zwischenförderer 3 und aus einem Abförderer 4. Der Zuförderer 2, der zum Zuführen des mehrspurigen Flaschenstromes dient und bei der dargestellten Ausführungsform auch die Funktion eines Puffers hat, ist im wesentlichen von mehreren in sich geschlossenen und von einem nicht näher dargestellten steuerbaren Antrieb endlos umlaufend angetriebenen Transportbändern 5 sowie von zwei die Spur-bzw. Förderbreite des Zuförderers 2 begrenzenden Führungsgeländern 6 gebildet. In der Figur bezeichnet der Pfeil A die Transportrichtung des Zuförderers 2, die gleichzeitig auch die Transportrichtung des Zwischenförderers 3 und des Abförderers 4 ist.

Der Zwischenförderer 3, auf dem das eigentliche Umformen des mehrspurigen Flaschenstromes in den einspurigen Flaschenstrom erfolgt, besteht im wesentlichen aus einer Vielzahl von durch nicht dargestellte Antriebe endlos umlaufend angetriebenen Transportbändern 7, die teilweise in Transportrichtung A aneinander anschließend, teilweise auch senkrecht zur Transportrichtung A nebeneinander vorgesehen sind, sowie aus zwei seitlichen Führungsgeländern 8, von denen jedes in Transportrichtung A an ein Führungsgeländer 6 anschließt und die in einem den Eingangsbereich des Zwischenförderers 3 aufweisenden Teilbereich 3' dieses Zwischenförderers 3 zunächst parallel zueinander sowie auch parallel zu einer in Transportrichtung verlaufenden horizontalen Mittelachse M angeordnet sind. Im Teilbereich 3' begrenzen die Führungsgeländer 8 somit eine Gasse für die Flaschen 1 mit einer der Förderbreite des Zuförderers 2 entsprechenden gleichbleibenden Breite. Anschließend erstrecken sich die Führungsgeländer 8 in einem Teilbereich 3'' ebenfalls symmetrisch zu der Mittelachse M, aber schräg zu dieser Mittelachse M bzw. zur Transportrichtung A, und zwar derart, daß die Breite der zwischen den beiden Führungsgeländern 8 gebildeten Gasse dort ständig abnimmt. Hierdurch wird ein symmetrisch zur Mittelachse M ausgebildeter, sich keilförmig verengender Umformbereich erhalten, in dem schließlich die Spur- bzw. Förderbreite des Zwischenförderers 3 an seinem den Zuförderer abgewandten Ausgangsbereich dem einspurigen Flaschenstrom entspricht.

Mit seinem dem Zuförderer zugewandten Eingangsbereich schließt sich der Zwischenförderer 3 über einen von wenigstens einem Gleitblech gebildeten Übergang 9 spurgleich an den Zuförderer 2 an. Der Übergang 9 bzw. das wenigstens eine Gleitblech bilden eine Überschubkante 9'.

Die schmalen Transportbänder 7, die Bänder mit einem Vergleich zu den Transportbändern 5 geringeren Breite sind, bilden mehrere Förderabschnitte, und zwar
einen mittleren Förderabschnitt F1, der unmittelbar an der Mittelachse M und achsgleich mit dieser vorgesehen ist und von mehreren, sich in Richtung der Mittelachse M bzw. in Transportrichtung A aneinander anschließenden Transportbändern 7 gebildet ist, sowie
weitere seitliche Förderabschnitte F2 - F6, die jeweils paarweise und symmetrisch zur Mittelachse M vorgesehen sind und sich senkrecht zur Transportrichtung A an den Förderabschnitt F1 bzw. aneinander anschließen.

Demnach sind seitlich von dem Förderabschnitt F1 jeweils ein Förderabschnitt F2, seitlich von jedem Förderabschnitt F2 jeweils ein Förderabschnitt F3 usw. vorgesehen. Bei der dargestellten Ausführungsform bestehen auch sämtliche Förderabschnitte F2 - F6 aus mehreren, in Transportrichtung A aneinander anschließenden Transportbändern 7.

Ebenso wie die Transportbänder 5 bilden auch die Transportbänder 7 mit ihren oberen Längen bzw. mit ihrem Obertrum eine horizontale oder im wesentlichen horizontale Transportfläche, die in ihrer Form bzw. Ausgestaltung an die sich in Transportrichtung A keilförmig verengende Spur- bzw. Förderbreite des Teilbereichs 3' angepaßt ist, und zwar entweder dadurch, daß die Transportbänder 7 zumindest im Teilbereich 3' hinsichtlich ihrer Länge entsprechend gewählt sind, oder aber dadurch, daß die Anzahl der die einzelnen Förderabschnitte F1 - F6 bildenden Transportbänder 7 von dem mittleren bzw. innenliegenden Förderabschnitt F1 zu den weiter außenliegenden Förderabschnitten F2 - F6 hin abnimmt.

Dort, wo die Transportbänder 7 der Förderabschnitte F1 - F6 aneinander anschließen, sind jeweils von Blechen gebildete Übergänge 10 vorgesehen. Diese Übergänge 10 bzw. Umlenkungen der Transportbänder 7 sind in Transportrichtung A jeweils kammartig versetzt, d.h. jeder Übergang 10 bzw. jede Umlenkung eines Transportbandes 7 eines Förderabschnittes ist jeweils senkrecht zur Transportrichtung A dem durchgehenden Obertrum eines Transportbandes 7 eines benachbarten Förderabschnittes benachbart und wird durch dieses benachbarte Transportband 7 überbrückt. An ihren in Transportrichtung A vorderen Enden sind die Transportbänder 7 jeweils angetrieben. Die entsprechenden Achsen sind mit 11 bezeichnet.

Die den Ausgangsbereich des Zwischenförderers 3 bildenden letzten Transportbänder 7, die auch am Ausgangsbereich des Zwischenförderers 3 weiterhin beidseitig der Mittelachse M vorgesehen sind, sind bei der dargestellten Ausführungsform zugleich die Transportbänder des Abförderers 4 und an ihrem in Transportrichtung A vorderen Ende durch einen Antrieb angetrieben. Die entsprechende Welle ist mit 11' bezeichnet.

Um eine drucklose Zusammenführung des mehrspurigen, angeförderten Flaschenstroms in den einspurigen, abzufördernden Flaschenstrom zu erreichen, ist der Zwischenförderer 3 als mehrstufige Beschleunigungsstrecke betrieben, d.h. die Antriebe für die einzelnen Transportbänder sind so ausgeführt, daß in jedem Förderabschnitt F1 - F6 jedes in Transportrichtung A an ein Transportband anschließende Transportband 7 eine höhere Fördergeschwindigkeit aufweist als das in Transportrichtung A vorausgehende Transportband 7.

Weiterhin sind bei der dargestellten Ausführungsform zumindest im Teilbereich 3'', aber auch in einer diesem Teilbereich 3'' bezüglich der Transportrichtung A vorausgehenden Teillänge des Teilbereichs 3' die Antriebe für die Transportbänder 7 hinsichtlich der Geschwindigkeit so abgestuft, daß senkrecht zur Transportrichtung A die Fördergeschwindigkeit benachbarter Transportbänder 7 von dem inneren Förderabschnitt F1 zu den äußeren Förderabschnitten F6 hin abnimmt. Dabei ist selbstverständlich die Fördergeschwindigkeit der beiden, den Ausgangsbereich des Zwischenförderers 3 bildenden Transportbänder 7 gleich der Fördergeschwindigkeit des Abförderers 4. Durch diese sowohl in Transportrichtung A als auch senkrecht zur Transportrichtung A abgestufte Fördergeschwindigkeit der Transportbänder 7 und die große Länge des Teilbereiches 3' wird eine optimale Auflösung bzw. Auflockerung des zugeführten mehrspurigen Flaschenstromes bereits im Teilbereich 3' erreicht, wobei anschließend im Teilbereich 3'' unter weiterer Auflockerung eine optimale Zusammenführung der Flaschen 1 im Teilbereich 3'' erfolgt, so daß sich insgesamt eine drucklose Zusammenführung des mehrspurigen Flaschenstromes in den einspurigen Flaschenstrom auch bei hohen Leistungen ergibt.

Ein von einem Überschubblech gebildeter Übergang ist am Anschluß des Abförderers 4 an den Zwischenförderer 3 oder im Bereich des Abförderers 4 nicht erforderlich. Es versteht sich, daß die Fördergeschwindigkeit des Abförderers größer ist als die Fördergeschwindigkeit des Zuförderers, und zwar um einen Faktor, der der Anzahl der Spuren des mehrspurigen Flaschenstromes entspricht.

Der Zwischenförderer 3 ist hinsichtlich der Gruppierung und Anordnung der Transportbänder 7 bzw. der Förderabschnitte F1 - F2 und der abgestuften, unterschiedlichen Fördergeschwindigkeiten der Transportbänder 7 symmetrisch zur Mittelachse M ausgeführt.

Bei der dargestellten Ausführungsform ist an einer an den Zuförderer 2 unmittelbar anschließenden Teillänge des Teilbereichs 3' des Zwischenförderers 3 ein den Zuförderer 2 steuernder Stausensor 12 vorgesehen, d.h. diese Teillänge des Teilbereichs 3' bzw. die dortigen Transportbänder 7 des Zwischenförderers 3 dienen zugleich als Reglerpuffer für den Zuförderer 2.

Der Abförderer 4, der symmetrisch zur Mittelachse M angeordnet ist und bereits am Ausgangsbereich des Zwischenförderers 3 eine Gasse für die Flaschen 1 mit einer dem einspurigen Flaschenstrom entsprechenden Spur- oder Förderbreite bildet, wird im wesentlichen von den bereits erwähnten Transportbändern 7 sowie von zwei Führungsgeländern 13 gebildet, von denen jedes an ein Führungsgeländer 8 anschließt und die parallel zueinander sowie parallel zur Mittelachse M und von dieser auch gleich beabstandet vorgesehen sind. Der Abstand der beiden Führungsgeländer 13 entspricht selbstverständlich der Spur- bzw. Förderbreite des einspurigen Flaschenstromes.

An dem dem Zwischenförderer 3 entfernt liegenden Auslauf des Abförderers 4 schließt sich an diesen seitlich ein Transporteur 14 an, der von Führungsgeländern 15 und einem den Transportbändern 5 entsprechenden Transportband 16 gebildet ist und auf den die Flaschen 1 des einspurigen Flaschenstroms durch entsprechende Ausbildung der Führungsgeländer 15 seitlich übergeschoben werden.

Bei der dargestellten Ausführungsform schließen die Führungsgeländer 8 im Teilbereich 3'' mit der Mittelachse einen Winkel von etwa 15 bis 30^{o} ein.

Die Erfindung wurde vorstehend an einem Ausführungsbeispiel beschrieben. Es versteht sich, daß zahlreiche Änderungen sowie Abwandlungen möglich sind, ohne daß dadurch der der Erfindung zugrundeliegende Erfindungsgedanke verlassen wird. So ist selbstverständlich die Anordnung in ihrer Verwendung nicht auf das Umformen eines mehrspurigen Flaschenstroms in einen einspurigen Flaschenstrom beschränkt, sondern mit der Anordnung können ganz allgemein mehrspurige Behälterströme, die von Flaschen, Dosen oder dgl. Behältern gebildet sind, in einen einspurigen Flaschenstrom optimal umgeformt werden.

### Aufstellung der verwendeten Bezugsziffern

- 1: Flasche
- 2: Zuförderer
- 3: Zwischenförderer
- 3', 3'': Teilbereich
- 4: Abförderer
- 5: Transportband
- 6: Führungsgeländer
- 7: Transportband
- 8: Führungsgeländer
- 9, 10: Übergang
- 11, 11': Achse
- 12: Stausensor
- 13: Führungsgeländer
- 14: Transporteur
- 15: Führungsgeländer
- 16: Transportband
- F1 - F6: Förderabschnitt
- A: Transportrichtung
- M: Mittelachse

## Patentansprüche

1. Anordnung zum Umformen eines angeförderten, mehrspurigen Behälterstromes in einen abzufördernden, einspurigen Behälterstrom, mit mehreren endlos umlaufenden und mit ihren oberen Längen Standflächen für die Behälter (1) bildenden Transportbändern (5, 7), von denen erste Transportbänder (5) einen seitliche Führungsgeländer (6) aufweisenden mehrspurigen Zuförderer (2) und hieran in einer Transportrichtung (A) an einem ersten Übergang (9) anschließend zweite Transportbänder (7) einen Zwischenförderer (3) bilden, der zum Auflockern und Umformen des mehrspurigen Behälterstromes eine durch seitliche Führungsgeländer (8) begrenzte Gasse für die Behälter (1) bildet, die in einem ersten in Transportrichtung (A) auf den Zuförderer (2) folgenden Teilbereich (3') eine konstante, dem mehrspurigen Behälterstrom entsprechende Spur- bzw. Förderbreite aufweist und sich in einem zweiten, anschließenden Teilbereich (3'') des Zwischenförderers (3) symmetrisch zu einer sich in Transportrichtung (A) erstreckenden Mittelachse (M) der Gasse verengt, und an dessen Ausgangsbereich sich in Transportrichtung (A) ein Abförderer anschließt, welcher für die Behälter (1) auf wenigstens einem Transportband (7) und zwischen seitlichen Führungsgeländern (13) eine Gasse bildet, deren Förderbreite dem einspurigen abzufördernden Behälterstrom entspricht, wobei die zweiten Transportbänder (7) symmetrisch zur Mittelachse (M) angeordnet sind und mehrere senkrecht zur Transportrichtung (A) aneinander anschließende und zur Mittelachse (M) symmetrische Förderabschnitte (F1 -F6) mit in Transportrichtung (A) an zweiten Übergängen (10) aneinander anschließenden zweiten Transportbändern (7) bilden, und wobei die zweiten Transportbänder (7) abgestuft mit unterschiedlicher Geschwindigkeit, d.h. mit Geschwindigkeitsabstufungen derart angetrieben sind, daß bei zwei in Transportrichtung (A) aufeinander folgenden zweiten Transportbändern (7) eines Förderabschnittes (F1 - F6) das jeweilige in Transportrichtung (A) nachfolgende, dem Abförderer (4) näher liegende zweite Transportband (7) eine höhere Geschwindigkeit als das in Transportrichtung (A) vorausgehende zweite Transportband (7) aufweist, dadurch gekennzeichnet, daß sich die Gasse des Zwischenförderers (3) bis auf die dem einspurigen Behälterstrom entsprechende Förderbreite symmetrisch zur Mittelachse (M) verengt, daß die dem einspurigen Behälterstrom entsprechende Gasse des Abförderers (4) symmetrisch zur Mittelachse (M) unmittelbar an den Ausgangsbereich des Zwischenförderers (3) anschließt, daß in Transportrichtung (A) mehr als zwei Geschwindigkeitsabstufungen vorgesehen sind, daß die zweiten Transportbänder (7) zumindest teilweise auch senkrecht zur Transportrichtung (A) hinsichtlich ihrer Geschwindigkeit derart abgestuft sind, daß von zwei senkrecht zur Transportrichtung (A) einander benachbarten zweiten Transportbändern (7) das der Mittelachse (M) entfernter liegende zweite Transportband (7) die kleinere Geschwindigkeit aufweist, und daß der erste Teilbereich (3') des Zwischenförderers (3) in Transportrichtung (A) eine Länge aufweist, die wenigstens gleich, bevorzugt größer ist als der zweite Teilbereich (3'').

2. Anordnung nach Anspruch 1, dadurch gekennzeichnet, daß die Förderabschnitte (F1 - F6) auch hinsichtlich der Geschwindigkeitsabstufungen ihrer Tansportbänder (7) senkrecht zur Transportrichtung (A) symmetrisch zur Mittelachse (M) ausgebildet sind.

3. Anordnung nach Anspruch 1 oder 2, dadurch gekennzeichnet, daß die Länge des ersten Teilbereichs (3') einem Vielfachen, beispielsweise einem Zwei- oder Dreifachen der Länge des zweiten Teilbereichs (3'') entspricht.

4. Anordnung nach einem der Ansprüche 1 bis 3, dadurch gekennzeichnet, daß die Führungsgeländer (8) zumindest in dem zweiten Teilbereich (3'') geradlinig verlaufend ausgeführt sind.

5. Anordnung nach Anspruch 4, dadurch gekennzeichnet, daß die Führungsgeländer (8) in dem zweiten Teilbereich (3'') mit der Mittelachse (M) einen Winkel in der Größenordnung von etwa 15^{o} bis 30^{o} einschließen.

6. Anordnung nach einem der Ansprüche 1 bis 5, dadurch gekennzeichnet, daß die zweiten Transportbänder (7) eine Breite aufweisen, die kleiner ist als die Breite der ersten Transportbänder (5).

7. Anordnung nach einem der Ansprüche 1 bis 6, dadurch gekennzeichnet, daß wenigstens ein Transportband (7) zumindest eines mittleren, der Mittelchse (M) unmittelbar benachbarten Förderabschnittes (F1) zugleich das Transportband (7) des Abförderers (4) bildet.

8. Anordnung nach Anspruch 7, dadurch gekennzeichnet, daß ein erster Förderabschnitt (F1) achsgleich mit der Mittelachse (M) vorgesehen ist.

9. Anordnung nach einem der Ansprüche 1 bis 8, dadurch gekennzeichnet, daß der erste Teilbereich (3') des Zwischenförderers (3) in einer an den Zuförderer (2) anschließenden Teillänge als Reglerpuffer mit wenigstens einem Stausensor (12) ausgebildet ist.

10. Anordnung nach Anspruch 9, dadurch gekennzeichnet, daß der Stausensor (12) zur Steuerung des als Puffer bzw. Pufferband ausgebildeten Zuförderers (2) dient.

11. Anordnung nach einem der Ansprüche 1 bis 10, dadurch gekennzeichnet, daß insbesondere im ersten Teilbereich (3') des Zwischenförderers (3) die zweiten Übergänge (10) benachbarter Förderabschnitte (F1 - F6) kammartig, d.h. in Transportrichtung (A) derart versetzt sind, daß jedem zweiten Übergang (10) oder einer Transportbandumlenkung senkrecht zur Transportrichtung (A) das Obertrum eines zweiten Transportbandes benachbart liegt bzw. von diesem benachbarten zweiten Transportband (7) überbrückt wird.

12. Anordnung nach einem der Ansprüche 1 bis 11, dadurch gekennzeichnet, daß der erste Übergang (9) eine senkrecht zur Transportrichtung (A) verlaufende Überschubkante (9') bildet.
